# EUROPEAN PATENT APPLICATION

(11) **EP 4 379 424 A1**
(43) Date of publication of application: **05.06.2024**
(21) Application number: 23191343.5
(22) Date of filing: 14.08.2023
(51) Int. Cl.: G01S 17/931, G01S 7/48, G01S 17/66, G01S 17/89

(54) **MULTIPATH OBJECT IDENTIFICATION FOR NAVIGATION**

(30) Priority: 14.08.2022 US 202263371389 P
(71) Applicant: Innoviz Technologies Ltd., 4809202 Rosh Ha'Ayin (IL)
(72) Inventor: Kupershtein, Evgeny, 4465008 Kfar Saba (IL); Kahana, Nir, 5545051 Kiryat-Ono (IL); Yeruhami, Oded, 6266310 Tel Aviv (IL); Dgani, Yair, 7194900 Aley Zehav (IL); Gil-Ad, Eyal, 8158764 Yavne (IL); Day, Amir, 7031709 Beer Yakov (IL)
(74) Representative: Zimmermann & Partner Patentanwälte mbB

(57) **Abstract**

A method of processing of LIDAR measurement data including: receiving successive LIDAR 3D data sets over a time from a LIDAR system moving, during the time, through space, each LIDAR 3D data set corresponding to a measurement field of view (FOV) of the LIDAR system; identifying a plurality of objects in the LIDAR 3D data sets; designating at least one of the plurality of objects as at least one potential aggressor object; tracking position of the one or more potential aggressor objects relative to the LIDAR system as the one or more potential aggressor objects move outside of the measurement FOV of the LIDAR system; and characterizing one or more of the plurality of objects as one or more multi-path object using tracked position of the one or more potential aggressor objects.

## Description

### TECHNOLOGICAL FIELD

The present disclosure, in some embodiments, thereof, relates to navigation and, more particularly, but not exclusively, to navigation of vehicles using LIDAR (Light Detection and Ranging) measurements acquired from a vehicle-mounted LIDAR system.

### BACKGROUND ART

US Patent Application Publication No. US2018120842 discloses *"A control system of an autonomous vehicle (AV) can receive sensor data from a sensor array of the AV. The sensor data can comprise raw radar data from a radar system of the sensor array, and in many examples, a live LIDAR data from a LIDAR system of the sensor array. In certain implementations the control system can access a current localization map or a live LIDAR map of a surrounding area of the AV, and compare the raw radar data with the current localization map or the live LIDAR map to identify multipath objects in the raw radar data. The control system may then remove the multipath objects or track the actual objects corresponding to the multipath objects accordingly. "*

US Patent Application Publication No. US2020114907 discloses *"An automotive vehicle includes at least one actuator configured to control vehicle steering, acceleration, or shifting, at least one sensor configured to emit a signal having a first encoding scheme and receive a return signal, and at least one controller in communication with the actuator and the sensor. The controller is configured to control the actuator according to a first mode and a second mode. The controller is further configured to, in response to the sensor receiving a return signal having the first encoding scheme, control the actuator according to the first mode and, in response to the sensor receiving a return signal not having the first encoding scheme, control the actuator according to the second mode. "*

US Patent Application Publication No. US2021302597 discloses *"Perception data based multipath identification and correction is based on recognition that sensors such as radar, LIDAR, and cameras can generate perception data indicative of locations and properties of terrestrial objects in an environment surrounding a satellite navigation device (e.g., a GNSS receiver), which data may then be used in training, or updating, a model for determining or correcting distances to satellites to account for multipath. Multipath identification includes identifying multipaths to train the model, e.g., by using perception data to perform ray tracing. Multipath correction includes using the model to correct distance errors due to the multipaths or, equivalently, using the model to determine distances to satellites in a manner that accounts for the multipaths.* "

US Patent Application Publication No. US2020018854 discloses *"A machine vision system comprises a camera configured to generate one or more images of a field of regard of the camera, a lidar system, and a processor. The lidar system includes a laser configured to emit light, where the emitted light is directed toward a region within the field of regard of the camera and a receiver configured to detect light returned from the emitted light. The processor is configured to receive an indication of a location based on the returned light and determine whether a solid object is present at the location based on the one or more images. "*

"Fast Rule-Based Clutter Detection in Automotive Radar Data" to Johannes Kopp, Dominik Kellner, Aldi Piroli, and Klaus Dietmayer, published in IEEE 24th International Conference on Intelligent Transportation Systems (ITSC), Indianapolis, USA, 2021 discloses: *"Automotive radar sensors output a lot of unwanted clutter or ghost detections, whose position and velocity do not correspond to any real object in the sensor's field of view. This poses a substantial challenge for environment perception methods like object detection or tracking. Especially problematic are clutter detections that occur in groups or at similar locations in multiple consecutive measurements. In this paper, a new algorithm for identifying such erroneous detections is presented. It is mainly based on the modeling of specific commonly occurring wave propagation paths that lead to clutter. In particular, the three effects explicitly covered are reflections at the underbody of a car or truck, signals traveling back and forth between the vehicle on which the sensor is mounted and another object, and multipath propagation via specular reflection. The latter often occurs near guardrails, concrete walls or similar reflective surfaces.*"

Additional background art includes: US Patent No. US10296001B2, US Patent Application Publication No. US2017261602, US Patent Application Publication No. US2020333440, US Patent Application Publication No. US2021192235,US Patent No. US9739881, US Patent Application Publication No. US2021372796, US Patent Application Publication No. US2019257947, US Patent Application Publication No. US2021011156, US Patent Application Publication No. US2021026013, US Patent Application Publication No. US2017322309, US Patent No. US11158120, US Patent Application Publication No. US2019339393,US Patent Application Publication No. US2020249326,US Patent Application Publication No. US2015177367, US Patent No. US11170476, US Patent No. US9689967, US Patent Application Publication No. US2020103505,US Patent No. US11255958B2, and International Patent Application No. WO2022026576.

Acknowledgement of the above references herein is not to be inferred as meaning that these are in any way relevant to the patentability of the presently disclosed subject matter.

### GENERAL DESCRIPTION

Following is a non-exclusive list of some exemplary embodiments of the disclosure. The present disclosure also includes embodiments which include fewer than all the features in an example and embodiments using features from multiple examples, even if not listed below.

Example 1. A method of processing of LIDAR measurement data comprising:
receiving successive LIDAR 3D data sets over a time from a LIDAR system moving, during said time, through space, each LIDAR 3D data set corresponding to a measurement field of view (FOV) of said LIDAR system;
identifying a plurality of objects in said LIDAR 3D data sets;
designating at least one of said plurality of objects as at least one potential aggressor object;
tracking position of said one or more potential aggressor objects relative to said LIDAR system as said one or more potential aggressor objects move outside of said measurement FOV of said LIDAR system; and
characterizing one or more of said plurality of objects as one or more multi-path objects using tracked position of said one or more potential aggressor objects.

Example 2. The method according to Example 1, wherein said identifying one or more potential aggressor objects comprises identifying an object having high reflectivity.

Example 3. The method according to any one of Examples 1-2, wherein identifying one or more potential aggressor objects comprises identifying an object type.

Example 4. The method according to Example 3, wherein said identifying object types includes using one or more of LIDAR signal measurement intensity, object size, object position with respect to said LIDAR system, and object position with respect to other identified objects.

Example 5. The method according to any one of Examples 1-4, wherein identifying one or more potential aggressor objects comprises determining a likelihood that an object of said plurality of objects is a potential aggressor object.

Example 6. The method according to Example 5, wherein said determining comprises using weighted evaluations of a plurality of features of said one or more potential aggressor objects.

Example 7. The method according to Example 6, wherein said plurality of features includes a reflectivity and an object type.

Example 8. The method according to Example 7, wherein said object type is a signpost object type.

Example 9. The method according to Example 7, wherein said object type is an overhead gantry signpost object type identified as a planar object located at over a threshold height above said LIDAR system.

Example 10. The method according to any one of Examples 1-9, wherein said characterizing comprises identifying one or more objects of said plurality of objects which is at least partially obscured by an obscuring object of said plurality of objects.

Example 11. The method according to Example 10, wherein said one or more objects is at least partially obscured by said obscuring object along a measurement line of sight of said LIDAR system.

Example 12. The method according to any one of Examples 10-11, wherein said characterizing comprises identifying an object of said plurality of objects for which a position of said object, a position of said at least one potential aggressor object, a position of said obscuring object, and a position of said LIDAR system correspond to a possible reflection multipath for said LIDAR system.

Example 13. The method according to any one of Examples 10-12, wherein said characterizing comprises identifying one or more object which is at least partially obscured, in a plurality of said 3D LIDAR sets, by said obscuring object.

Example 14. The method according to any one of Examples 10-12, wherein said characterizing comprises identifying one or more object which moves at a corresponding velocity to movement of said obscuring object.

Example 15. The method according to any one of Examples 1-14, comprising removing said multi-path objects from said LIDAR 3D data sets.

Example 16. The method according to Example 15, comprising providing said LIDAR 3D data sets to a navigation system.

Example 17. The method according to any one of Examples 1-14, wherein said identifying comprises generating an object model using said identified objects.

Example 18. The method according to Example 17, comprising removing said multi-path objects from said object model.

Example 19. The method according to any one of Examples 17-18, comprising providing said object model to a navigation system.

Example 20. The method according to any one of Examples 1-19, wherein said tracking comprises receiving a trajectory of said LIDAR system.

Example 21. The method according to Example 20, wherein said receiving a trajectory comprises receiving movement sensor data and determining a trajectory of said LIDAR system using said sensor data.

Example 22. The method according to any one of Examples 20-21, comprising:
determining a change in position of stationary objects, in said successive LIDAR 3D data sets; and
wherein said determining said trajectory comprises using said change in position.

Example 23. The method according to any one of Examples 1-22, wherein said successive LIDAR 3D data sets include at least two LIDAR 3D data sets.

Example 24. The method according to any one of Examples 1-23, wherein said data sets each comprise a point cloud, each point in said point cloud corresponding to a determined location, from LIDAR sensor data, of a surface of a reflecting object.

Example 25. The method according to any one of Examples 1-24, wherein said moving comprises non-continuous movement of said LIDAR system.

Example 26. A LIDAR navigation system comprising:
one or more light source;
one or more light sensor;
a processor operatively connected to said light source and said light sensor configured to:
   control emission of light from said light source to scan a measurement field of view (FOV);
   generate LIDAR 3D data sets over a time, using sensor measurements received by said one or more light sensor where each LIDAR 3D data set corresponds to said measurement FOV;
   identify objects in said LIDAR 3D data sets to provide one or more identified objects;
   designate one or more of said identified objects as one or more potential aggressor objects;
   track position of said one or more potential aggressor objects as they move outside of a measurement FOV of said LIDAR system; and
characterize one or more of said identified objects as ghost objects using tracked position of said one or more potential aggressor objects.

Example 27. A method of processing of LIDAR measurement data comprising:
receiving a first LIDAR 3D data set corresponding to a first measurement field of view (FOV) of said LIDAR system;
identifying one or more objects measured in said first LIDAR 3D data set;
characterizing said one or more objects as one or more aggressor objects or non-aggressor objects;
tracking a position, with regards to said LIDAR system, of said one or more aggressor objects;
receiving a second LIDAR 3D data set corresponding to a second measurement FOV of said LIDAR system, where said position of said one or more aggressor objects is outside of said second measurement FOV;
identifying at least one object measured in said second LIDAR 3D data set;
determining if said at least one object is a ghost object, not corresponding to a real object, using said position of said one or more aggressor objects.

Example 28. A method of processing of LIDAR measurement data comprising:
receiving successive LIDAR 3D data sets, each LIDAR 3D data set corresponding to a measurement field of view (FOV) of said LIDAR system;
identifying a plurality of objects measured in said LIDAR 3D data sets;
characterizing at least a portion of said plurality of objects as aggressor objects or non-aggressor objects;
generating a model comprising positions, with regards to said LIDAR system, of said plurality of objects over time, including determined position of said at least a portion of said plurality of objects characterized as aggressor objects outside of said FOV of said LIDAR system;
determining if one or more of said plurality of objects of said model is a ghost object, failing to correspond to a real object, using said determined position of said one or more objects characterized as aggressor objects.

Example 29. A method of processing of LIDAR measurement data comprising:
receiving a LIDAR 3D data set from a LIDAR system set corresponding to a measurement field of view (FOV) of said LIDAR system;
identifying a plurality of objects in said LIDAR 3D data set;
identifying one or more potential aggressor object by inferring a position of said one or more potential aggressor objects outside said measurement FOV;
characterizing one or more of said plurality of objects as one or more multi-path object using said position of said one or more potential aggressor objects.

Example 30. The method according to Example 29, wherein said inferring comprises using one or more feature of said plurality of objects.

Example 31. The method according to any one of Examples 29-30, wherein said a potential aggressor object of said one or more potential aggressor objects is a surface of one of said plurality of objects which does not appear in said FOV; and
wherein said inferring said position is using one or more feature of said one of said plurality of objects.

Example 32. The method according to any one of Examples 29-30, comprising receiving additional data regarding one or more of said plurality of objects;
wherein said inferring said position of said one or more potential aggressor objects is using said additional data.

Example 33. The method according to Example 32, wherein said additional data comprises image data.

Unless otherwise defined, all technical and/or scientific terms used within this document have meaning as commonly understood by one of ordinary skill in the art/s to which the present disclosure pertains. Methods and/or materials similar or equivalent to those described herein can be used in the practice and/or testing of embodiments of the present disclosure, and exemplary methods and/or materials are described below. Regarding exemplary embodiments described below, the materials, methods, and examples are illustrative and are not intended to be necessarily limiting.

Some embodiments of the present disclosure are embodied as a system, method, or computer program product. For example, some embodiments of the present disclosure may take the form of an entirely hardware embodiment, an entirely software embodiment (including firmware, resident software, micro code, etc.) or an embodiment combining software and hardware aspects that may all generally be referred to herein as a "circuit," "module" and/or "system."

Implementation of the method and/or system of some embodiments of the present disclosure can involve performing and/or completing selected tasks manually, automatically, or a combination thereof. According to actual instrumentation and/or equipment of some embodiments of the method and/or system of the present disclosure, several selected tasks could be implemented by hardware, by software or by firmware and/or by a combination thereof, e.g., using an operating system.

For example, hardware for performing selected tasks according to some embodiments of the present disclosure could be implemented as a chip or a circuit. As software, selected tasks according to some embodiments of the present disclosure could be implemented as a plurality of software instructions being executed by a computational device e.g., using any suitable operating system.

In some embodiments, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage e.g., for storing instructions and/or data. Optionally, a network connection is provided as well. User interface/s e.g., display/s and/or user input device/s are optionally provided.

Some embodiments of the present disclosure may be described below with reference to flowchart illustrations and/or block diagrams. For example illustrating exemplary methods and/or apparatus (systems) and/or and computer program products according to embodiments of the present disclosure. It will be understood that each step of the flowchart illustrations and/or block of the block diagrams, and/or combinations of steps in the flowchart illustrations and/or blocks in the block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart steps and/or block diagram block or blocks.

These computer program instructions may also be stored in a computer readable medium that can direct a computer (e.g., in a memory, local and/or hosted at the cloud), other programmable data processing apparatus, or other devices to function in a particular manner, such that the instructions stored in the computer readable medium can be used to produce an article of manufacture including instructions which implement the function/act specified in the flowchart and/or block diagram block or blocks.

The computer program instructions may also be run by one or more computational device to cause a series of operational steps to be performed e.g., on the computational device, other programmable apparatus and/or other devices to produce a computer implemented process such that the instructions which execute provide processes for implementing the functions/acts specified in the flowchart and/or block diagram block or blocks.

Some of the methods described herein are generally designed only for use by a computer, and may not be feasible and/or practical for performing purely manually, by a human expert. A human expert who wanted to manually perform similar tasks, might be expected to use different methods, e.g., making use of expert knowledge and/or the pattern recognition capabilities of the human brain, potentially more efficient than manually going through the steps of the methods described herein.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
FIG. 1A is a simplified schematic of a navigation system, according to some embodiments of the disclosure;
FIG. 1B is a simplified schematic of a navigation system, according to some embodiments of the disclosure;
FIG. 2 is a flow chart of a method according to some embodiments of the disclosure;
FIGs. 3A-D are simplified schematics of LIDAR light paths, according to some embodiments of the disclosure;
FIGs. 4A-B are simplified schematics of LIDAR light paths, according to some embodiments of the disclosure;
FIG. 5 is a method of navigation, according to some embodiments of the disclosure;
FIG. 6A is a flow chart of a method of potential aggressor object identification, according to some embodiments of the disclosure;
FIG. 6B is an illustration showing potential aggressor object identification, according to some embodiments of the disclosure;
FIG. 7A is a flow chart of a method of suspected ghost object identification, according to some embodiments of the disclosure;
FIG. 7B is an illustration showing suspected ghost object identification, according to some embodiments of the disclosure; and
FIG. 8 is a simplified schematics of LIDAR light paths, according to some embodiments of the disclosure.

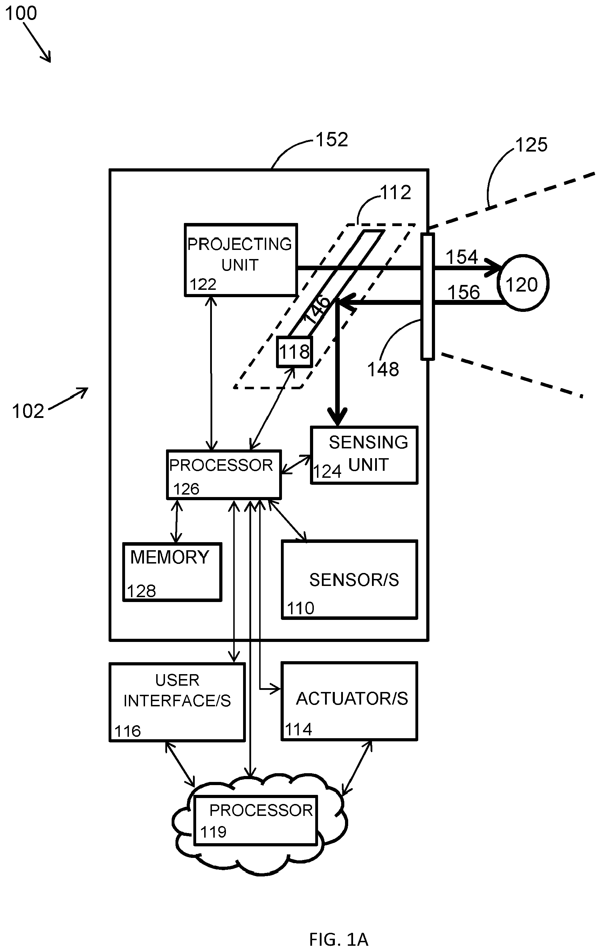

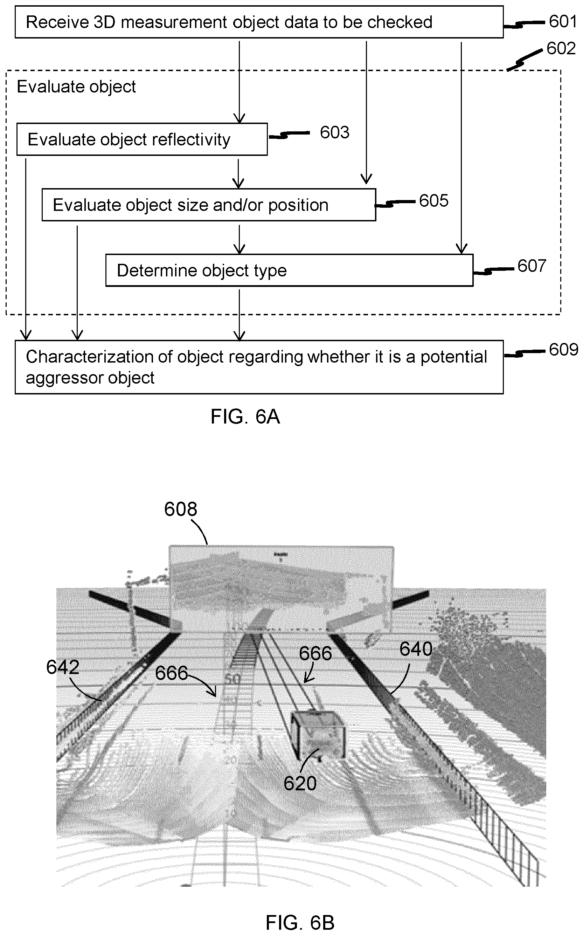

In some embodiments, although non-limiting, in different figures, like numerals are used to refer to like elements, for example, element 102 in FIG. 1 corresponding to element 602 in FIG. 6.

### DETAILED DESCRIPTION OF EMBODIMENTS

The present disclosure, in some embodiments, thereof, relates to navigation and, more particularly, but not exclusively, to navigation of vehicles using LIDAR (Light Detection and Ranging) measurements acquired from a vehicle-mounted LIDAR system.

### Overview

A broad aspect of some embodiments of the disclosure relates to removal of ghost objects, also herein termed "multi-path objects" or "multipath objects" from Light Detection and Ranging (LIDAR) data using tracking of out of field-of-view (FOV) object/s and/or surface/s potentially acting as reflectors for multipath routes of the LIDAR light.

In some embodiments, a multipath object is an artifact resulting from LIDAR data detection (e.g., a cluster of detections and/or points) with incorrect position which does not correlate to a real object, but to a reflection (e.g., along a line of sight of the LIDAR detection) of a real object by intermediate object/s. Where light emitted by the LIDAR system follows a multiple path having more than one reflection (e.g., at more than one object) before being sensed at the LIDAR system light sensor/s. The real object contributing to detection of ghost objects is herein termed an "aggressor" object. Where, for example, light emitted by the LIDAR system is reflected by an intermediate object along a line of sight of the LIDAR emission, to the aggressor object, and then back to the LIDAR system, via the intermediate object.

In some embodiments, a LIDAR system acquiring the LIDAR data is moving through space e.g., where the LIDAR system is mounted on a vehicle, the vehicle herein also termed the "host vehicle". In some embodiments, the LIDAR data (from which ghost object/s are removed) is used for navigation (e.g., of the vehicle).

In some embodiments, the LIDAR system acquires data sets for different volumes of space (e.g., sequentially) as the LIDAR system moves. In some embodiments, the different volumes of space are termed LIDAR field of views (FOVs).

In some embodiments, the FOVs extend in a limited range of directions around the LIDAR system. In some embodiments, (e.g., where the LIDAR system includes a rotating system) the FOVs extend in 360 degrees around the LIDAR system.

In some embodiments, LIDAR data includes point clouds, each point cloud associated with a measurement FOV. Where, in some embodiments, a point cloud is generated (e.g., with a time of flight method), using timing and orientation information of emitted and/or detected laser light.

In some embodiments, objects are identified within one or more point cloud (a single point cloud herein also termed a "frame" or a "point cloud frame"), e.g., as clusters of points.

In some embodiments, methods (e.g., as described within this document) are performed on point clouds. Where, for example, identified objects remain as a categorized point and/or cluster of points.

In some embodiments, identified aggressor objects which, in some embodiments, are stored as one or more points having a spatial relationship to successive point clouds, including when they pass out of a FOV of the LIDAR system, are used to process (e.g., identify and/or remove multipath object/s) acquired (e.g., subsequently received) point cloud/s.

In some embodiments, the term aggressor object should be understood to referring to a surface of a real object which surface is a potential aggressor reflector.

In some embodiments, the term aggressor object should be understood real object (e.g. vehicle, signpost) having one or more surface which is a potential aggressor reflector.

Alternatively or additionally, in some embodiments, an object model is generated. Where, for example, objects identified in the point cloud are used to generate the object model. Once identified, in some embodiments, the objects are characterized (e.g., as potential aggressor object/s and/or suspected ghost object/s).

In some embodiments, identifying and/or characterizing of object/s is using a single point cloud (e.g., associated with a single FOV). Alternatively or additionally, in some embodiments, identifying and/or characterizing of an object includes using more than one point cloud, for example, the same object appearing over time in different point clouds being used to identify (e.g. add the object to an object model) and/or characterize the object (e.g. in the point cloud directly and/or in the object model).

A broad aspect of some embodiments of the disclosure relates to identifying potential aggressor object/s which are at least partially outside of the LIDAR FOV and using feature/s of the identified aggressor object/s to identify ghost objects within the FOV.

In some embodiments, identified potential aggressor surfaces which initially appear in a LIDAR FOV are tracked as they move outside the FOV. In some embodiments, identified potential aggressor surface/s are inferred from information within LIDAR data, for example, where the surface/s do not fully appear within a FOV. Where, for example, in some embodiments, a potential aggressor is identified in a single frame of LIDAR data.

In some embodiments, existence and/or features of an aggressor object are inferred from visible portion/s of the object within a FOV. For example, where an object with known features is characterized, non-visible portion/s of the object are identified and/or characterized as being aggressor surface/s.

For example, if an object is identified as being a truck, where sides of the truck are potential aggressors, although a side may be obscured and/or outside of a FOV, in some embodiments, inferred feature/s of the side (e.g. based on the object characterization and/or object type model) are used to determine ghost object/s.

An aspect of the disclosure relates to, for a potentially moving LIDAR system, acquiring sequential LIDAR measurements, identifying potential aggressor objects in the LIDAR measurements, tracking of the potential aggressor objects as they move outside of the LIDAR FOV, and identifying ghost objects using tracked position of the potential aggressor objects.

In some embodiments, the data form in which potential aggressor objects is stored is less heavy than that produced by the LIDAR system and/or provided for navigation.

For example, in some embodiments, a LIDAR system produces sets of point clouds e.g., sequentially with time. Where, for navigation, only those more recently received point clouds are used. In some embodiments, potential aggressor objects, as they move outside the FOV, are stored in memory and tracked with respect to the currently received LIDAR data (e.g., point clouds) without storing the point cloud data from which they were identified to be potential aggressor objects. A potential advantage being the ability to identify multi-path objects with lower processing and/or memory costs. Processing potentially reduced because entire point clouds are not checked for aggressor objects. Memory requirement potentially reduced associated with not requiring measurements (point clouds) to be retained for identification and/or used of aggressor/s in identifying multi-path objects.

Where moving outside of the LIDAR FOV, in some embodiments, occurs as soon (or prior to) the LIDAR system moving past the object e.g., in the case where the LIDAR FOV is limited in angle e.g., extending forward in a direction of travel of the system. Where, in some embodiments, moving outside of the LIDAR FOV is delayed further as a portion of the FOV extends away from the LIDAR system in a direction away from the direction of travel (e.g., in the case of a 360 degree FOV).

In some embodiments, object classification occurs at an object model level where the object model is extended from including only currently detected objects, with potentially aggressor objects extending outside the FOV of the LIDAR system. Processing objects at the object level includes, in some embodiments, potential computational requirement advantages e.g., memory and/or processing.

In some embodiments, an object model including information regarding objects identified as potential aggressor objects is generated (e.g., the object model includes characterization/s of objects e.g., a potential aggressor object model is generated). Where the model includes potential aggressor objects (and optionally other identified objects within a FOV) which are outside a current FOV of the LIDAR system. The model, in some embodiments, is used to identify ghost object/s associated with 'out of FOV' aggressor objects.

Practically speaking, and without wanting to be bound by theory, it is theorized that ghost objects are associated with reflection paths where at least one of the reflecting surfaces in the path has high reflectivity e.g., the aggressor object and/or other object/s in a multi-reflection light path. In some embodiments, ghost objects are detected when each reflective surface in the reflection path has high reflectivity.

In some embodiments, objects which are identified as having high reflectivity are characterized as potential aggressor objects. In some embodiments, objects which are identified as having specular reflectivity are characterized as potential aggressor objects. Where, in some embodiments, identification of high reflectivity and/or specular reflectivity is by comparison with a reflectivity threshold. Where, in some embodiments, 3D measurement data of the FOV includes reflectivity data e.g. points of a point cloud have an associated reflectivity measurement. In some embodiments, reflectivity of an object is determined as an average of reflectivity of the point cloud points which are categorized as being part of the object. Additionally or alternatively, in some embodiments, reflectivity of an object is determined using brightness and/or albedo e.g. of a reflection signal measured by the detector.

In some embodiments, identifying potential aggressor objects is by characterizing object types likely to be aggressor objects (e.g., where, some object types are deemed likely to have high reflectivity and/or have one or more surface having high reflectivity). Where, in some embodiments, object type is characterized using one or more of: intensity of reflection by the object, size, shape, location of the object with respect to other object/s, and movement of the object.

In some embodiments, object type is characterized by using one or more feature of a group of surfaces identified as being part of the object. For example, where a group of data points are identified as moving together and/or being close together spatially, surfaces within the group of data points are identified, certain groups of surfaces being characterized as belonging to particular object types.

In some embodiments, where a portion of a group of surfaces are identified in received data (e.g. one or more LIDAR data set), existence of other surface/s (e.g. potential aggressor surface/s) are inferred. For example, where a back and a single wing mirror are identified as surfaces in a vehicle, in some embodiments, feature/s of the other wing mirror are inferred e.g. including one or more of; position with respect to other portions of the object, movement feature/s, reflectivity, and size.

In some embodiments, existence of an object and/or portion of an object and/or of an object surface and/or feature/s thereof are determined based on surroundings of the object and/or portion of the object. For example, where a portion of an object is identified as such in one or more LIDAR data set, non-visible portion/s, in some embodiments, are inferred from the identified portion/s. For example, based on one or more assumption regarding the object e.g. a portion of a sign is identified, and remaining portion/s are inferred from an assumption that the sign is rectangular in shape.

In some embodiments, surroundings of an object are used when inferring feature/s of the object not appearing in LIDAR data. For example, where road features are identified from the data, position and/or other feature/s of a central barrier are inferred from the road feature/s.

For example, in an embodiment where it is assumed that signposts are an object type having high reflectivity, for example, stationary objects having size, shape, and position (e.g., with respect to a road) fulfilling certain requirements, are characterized as being signposts and added to the potential aggressor object model.

Optionally, in some embodiments, associated, for example, with rapid movement out of FOV of stationary objects, only moving ghost objects are evaluated. Where, moving ghost objects are those where at least one of the reflecting surfaces in the multi-path including a plurality of reflective surfaces, is a surface of a moving object, for example, another moving vehicle.

In some embodiments, identifying a ghost object includes (e.g., in addition to identifying a matching potential aggressor object) determining that the object is at least partially obscured (e.g., along a LIDAR system line of sight) by another object. Where, for example, in some embodiments, the obscuring object is assumed to be a final reflecting object in a multipath reflection responsible for the ghost object.

In some embodiments, tracking of potential aggressor objects includes determining a relative position of the aggressor objects with respect to the LIDAR system and/or to object/s within data acquired by the LIDAR system. In some embodiments, tracking of the potential aggressor objects includes determining movement of the LIDAR system through space and/or of the potential aggressor object through space. For example, using sensor data (e.g., accelerometer, speedometer). For example, using GNSS data. For example by tracking stationary objects within LIDAR data e.g., relative movement of which in the data, in some embodiments, is used to determine movement of the LIDAR system through space. For example, using data regarding movement of an aggressor object as supplied by the object itself, for example, where vehicle-to-vehicle communication is available, tracking includes receiving movement information regarding a potential aggressor vehicle (e.g., sensor data and/or LIDAR data and/or GNSS data regarding the vehicle) which includes potential aggressor surface/s. For example, using previously acquired movement data regarding the potential aggressor object (e.g. previous movement e.g. speed and/or direction used to determine future position).

In some embodiments, tracking of potential aggressor objects includes identifying when object/s previously categorized as potential aggressors cease to be potential aggressors (e.g., at above a threshold distance from the LIDAR system) for example, disregard (e.g., remove the object/s from an object model, for example cease tracking movement of the object/s) these objects when determining which objects are ghost objects. For example, in some embodiments, potential aggressor objects at 200-300m, or about 250m away from the LIDAR system are disregarded. In some embodiments, a distance at which potential aggressors are disregarded depends on one or more of a power of emitted light of the LIDAR system, a determined reflectivity of the aggressor object, and a determined reflectivity of the occluding object.

In some embodiments, once ghost objects are identified, they are removed from the LIDAR measurement data to provide navigation data. For example, where, in some embodiments, ghost objects are removed on one or more level. For example, removed from the object model. For example, removed from point cloud/s.

In some embodiments, navigation data is used to aid in navigation of an object. Alternatively or additionally, in some embodiments, navigation data is used for data collection, and/or validation, and/or is used in mapping. Where, in some embodiments, the vehicle is a road-vehicle. Where, in some embodiments, the vehicle is an air-vehicle, (e.g., unmanned aerial vehicle (UAV), drone, quadcopter). Where, in some embodiments, the vehicle is a water vessel (e.g., boat, ship, submarine).

In some embodiments, the navigation data is used in for autonomous (e.g., not requiring human input) and/or semi-autonomous navigation (e.g., some navigational step/s require human input e.g., navigation of a vehicle by a remote human operator e.g., display of navigation data to a human user who then supplies navigation commands).

A potential benefit of being able to correctly identify ghost objects as such is improved safety (e.g., reduced likelihood of negating a real object also herein termed a "false negative") and/or efficiency of navigation (e.g., navigation does not involve navigating around objects which do not exist also herein termed "false positive" objects).

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

### Exemplary system

FIG. 1A is a simplified schematic of a navigation system 100, according to some embodiments of the disclosure.

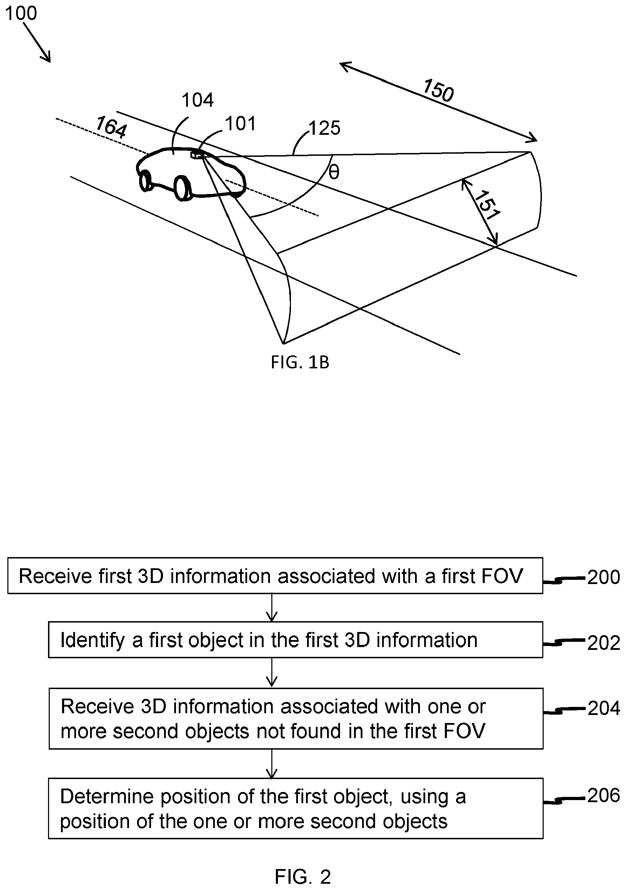

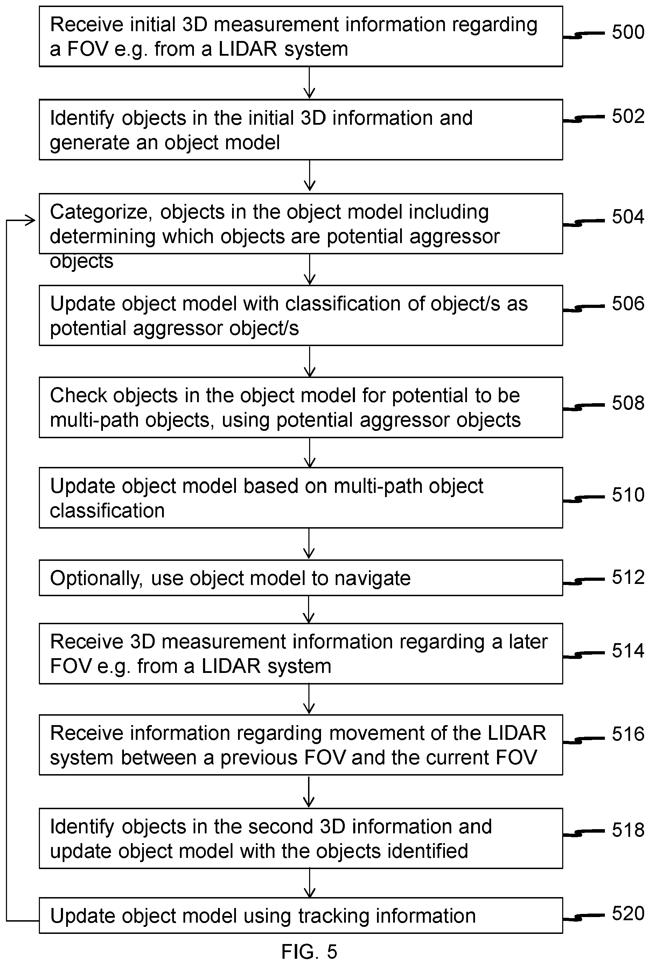

In some embodiments, navigation system 100 includes a LIDAR system 102. In some embodiments LIDAR system 102 acquires LIDAR measurement data according to one or more feature as described regarding step 200 FIG. 2 and/or step 500 FIG. 5.

In some embodiments, LIDAR system 102 includes a housing 152 which at least partially contains one or more element of LIDAR system 102.

LIDAR system 102, in some embodiments, collects measurement by scanning the environment of the LIDAR system. The term "scanning the environment of the LIDAR system" includes, in some embodiments, illuminating FOV 125 and/or a portion of FOV 125 of the LIDAR system 102 and/or sensing reflection of light from object/s 120 in FOV 125.

As used herein the term "FOV" and/or "FOV of the LIDAR system" 125, in some embodiments, includes an extent of an observable environment of the LIDAR system in which object/s 120 are detected. In some embodiments, FOV 125 is affected by one or more condition e.g., one or more of: an orientation of the LIDAR system (e.g., is the direction of an optical axis of the LIDAR system); a position of the LIDAR system with respect to the environment (e.g., distance above ground and adjacent topography and obstacles); operational parameter/s of the LIDAR system (e.g., emission power, computational settings, defined angles of operation).

In some embodiments, LIDAR system 102 includes a projecting unit 122 which projects light 154 (e.g., laser light). In some embodiments, projecting unit 122 includes at least one light source e.g., laser light source (a solid-state laser, laser diode, a high-power laser). Where, in some embodiments, light source/s include one or more laser light source and/or one or more alternative light source e.g., a light emitting diode (LED)-based light source. In some embodiments, the projecting unit 122 is controllable (e.g., receiving control signal/s from a LIDAR system processor 126) to emit laser light pulses of e.g., known duration and/or timing and/or in a known direction (e.g., controlled by movement of the light source/s or a light deflector).

In some embodiments, reflection/s 156 of the projected light 154 from object/s 120 located within FOV 125 are sensed by a sensing unit 124.

In some embodiments, sensing unit 125 includes one or more light sensor e.g., a laser light sensor. Where, in some embodiments, sensor/s generate an electrical measurement signal related to incident light (e.g., light reflected from object/s 120 within FOV 125) on sensing surface/s of the sensor/s. In some embodiments, the sensor/s generate sensing signals (e.g., with time) related to one or more of: power, frequency, phase, pulse timing, and pulse duration of electromagnetic radiation (e.g., laser light).

In some embodiments, sensor/s of sensing unit 124, include a plurality of detecting elements.

In some embodiments, sensor/s of sensing unit 124 includes light sensors of one or more types where different type sensor/s include different sensitivity and/or size and/or frequencies detected and/or energies detected. In some embodiments, a plurality of different sensors e.g., including different sensor types, are used to increase data acquired (e.g., in comparison to use of one sensor and/or one sensor type).

In some embodiments, sensor signal output from different sensors and/or different type/s of sensor (e.g., SPAD, APD, SiPM, PIN diode, Photodetector), in some embodiments, are combined together e.g., to form a single output.

In one embodiment, the sensor/s include one or more SiPMs (Silicon photomultipliers). Where, in some embodiments, the SiPM/s include an array of avalanche photodiodes (APD), and/or single photon avalanche diodes (SPAD), serving as detection elements e.g., on a common silicon substrate. In some embodiments, distance between SPADs, is between about 10µm and about 50µm. In some embodiments, each SPAD, has a recovery time of between about 20ns and about 100ns. Alternatively or additionally to use of SiPMs, in some embodiments, non-silicon photomultipliers are used.

In some embodiments, LIDAR system 102 includes a scanning unit 112, which directs light emitted 154 by projecting unit 122 and/or light received 156 by sensing unit 124. In some embodiments, scanning unit 112 includes one or more optical element 112 which e.g., directs incident light 156. In some embodiments, scanning unit 112 includes one or more actuator 118, the movement of which changes directing of emitted light 154 and/or received light 156. Where, in some embodiments, actuator/s 118 are controlled by processor 126.

In some embodiments, scanning the environment of the LIDAR system, includes moving and/or pivoting light deflector 112 to deflect light in differing directions toward different parts of FOV 125.

For example, in some embodiments, during a scanning cycle (e.g., where FOV 125 is measured by emitting a plurality of light pulses over a time period) a position of the deflector 112 and/or position of the light source/s is associated with a portion of FOV 125.

In some embodiments, LIDAR system 102 includes a single scanning unit 112 and/or a single sensing unit 124. In some embodiments, LIDAR system 102 includes more than one scanning unit 112 and/or more than one sensing unit 124 e.g., to provide multiple FOVs 125 e.g., potentially increasing a volume of a combined FOV (e.g., an area of space including the areas of space of the multiple FOVs) and/or a range of angles (e.g., around a vehicle to which the LIDAR system is attached) covered by the combined FOV.

In some embodiments, FOV 125 is an effective FOV where scanning unit 112 (e.g., sequentially) directs light pulses emitted by projecting unit 122 in a plurality of directions to measure different portions of FOV 125 and/or directs (e.g., sequentially) received light pulses from different portions of FOV 125 to sensing unit 124.

In some embodiments, for example, alternatively or additionally to moving scanning unit 112 to emit light in different directions, one or more actuator moves the light source (e.g., projecting unit includes one or more actuator controlled by processor 126) to emit light pulses in different directions to scan FOV 125.

In some embodiments, LIDAR system 102 includes at least one window 148 through which light is projected 154 and/or received 156. In some embodiments, window/s 148 are in housing 152. Where, in some embodiments, window/s 148 include transparent material. In some embodiments, window/s 148 include planar surface/s onto which projected 154 and/or received light 156 are incident. Optionally, in some embodiments, window/s collimate and/or focus incident projected 154 and/or received light 156 e.g., collimate projected light 154 e.g., focus reflected light 156. For example, where, in some embodiments, window 148 includes one or more portion having a curved surface.

In some embodiments, the light source of projecting unit 122 includes one or more vertical-cavity surface-emitting laser (VCSEL). For example, an array of VCSELs. Where, in some embodiments, when the light source includes an array of VCSELs, movement of a deflector and/or other mechanical elements (e.g., deflector 146 e.g., system 102 doesn't include deflector 146) is not used. For example, in some embodiments, light is emitted in different directions by selected activation of VCSELs from different positions in the array. In some embodiments, VCSELs the array are activated individually. In some embodiments, VCSELs the array are activated in groups (e.g., rows).

In some embodiments, the light source includes an external cavity diode laser (ECDL).

In some embodiments, the light source includes a laser diode.

In some embodiments, the light source emits light at a wavelength of about 650-1150nm or about 800-1000nm, or about 850-950nm, or 1300-1600nm, or lower or higher or intermediate wavelengths or ranges. In an exemplary embodiment, the light source emits light at a wavelength of about 905nm and/or about 1550nm.

In some embodiments, LIDAR system 102 includes a scanning unit 112.

In some embodiments, scanning unit 112 includes a light deflector 146. In some embodiments, light deflector 146 includes one or more optical elements which direct received light 156 (e.g., light reflected by object 120/s in FOV 125) towards a sensing unit 124.

In some embodiments, light deflector 146 includes a plurality of optical components, e.g., one or more reflecting element (e.g., a mirror) and/or one or more refracting element (e.g., prism, lens).

In some embodiments, scanning unit 112 includes one or more actuator 118 for movement of one or more portion of light deflector 146. Where, in some embodiments, movement of light deflector 146 directs incident light 156 to different portion/s of sensing unit 124.

For example, in some embodiments, light deflector 146 is controllable (e.g., by control of actuator/s 118 e.g., by processor 126) to one or more of; deflect to a degree α, change deflection angle by Δα, move a component of the light deflector by M millimeters, and change speed in which the deflection angle changes.

In some embodiments, actuator/s 146 pivot light deflector 146 e.g., to scan FOV 125. As used herein the term "pivoting" includes rotating of an object (especially a solid object) about one or more axis of rotation. In one embodiment, pivoting of the light deflector 146, in some embodiments, includes rotation of the light deflector about a fixed axis (e.g., a shaft).

In some embodiments, where other type/s of light deflectors are employed (e.g., non-mechanical-electro-optical beam steering, OPA) do not require any moving components and/or internal movements to change the deflection angles of deflected light. For example, scanning unit lacking actuator/s 118.

It is noted that any discussion relating to moving and/or pivoting a light deflector is also mutatis mutandis applicable to control of movement e.g., via control signals e.g., generated at and/or received by processor/s 119, 126.

In some embodiments, reflections associated with a portion of the FOV 125 corresponding to a position of light deflector 146.

As used herein, the term "instantaneous position of the light deflector" (also referred to as "state of the light deflector") refers to the location and/or position in space where at least one controlled component of the light deflector 146 is situated at an instantaneous point in time, and/or over a short span of time (e.g., at most 0.5 seconds, or at most 0.1 seconds, or at most 0.01 seconds, or lower or higher or intermediate times). In one embodiment, the instantaneous position of the light deflector, in some embodiments, is gauged with respect to a frame of reference. The frame of reference, in some embodiments, pertains to at least one fixed point in the LIDAR system. Or, for example, the frame of reference, in some embodiments, pertains to at least one fixed point in the scene. In some embodiments, the instantaneous position of the light deflector, include some movement of one or more components of the light deflector (e.g., mirror, prism), usually to a limited degree with respect to the maximal degree of change during a scanning of the FOV.

For example, a scanning of the entire FOV of the LIDAR system, in some embodiments, includes changing deflection of light over a span of 30°, and an instantaneous position of the at least one light deflector, includes angular shifts of the light deflector within 0.05°.

In other embodiments, the term "instantaneous position of the light deflector", refers to positions of the light deflector during acquisition of light which is processed to provide data for a single point of a point cloud (or another type of 3D model) generated by the LIDAR system. In some embodiments, an instantaneous position of the light deflector, corresponds with a fixed position and/or orientation in which the deflector pauses for a short time during illumination of a particular sub-region of the LIDAR FOV.

In some embodiments, an instantaneous position of the light deflector, corresponds with a certain position/orientation along a scanned range of positions/orientations of the light deflector e.g., that the light deflector passes through as part of a continuous and/or semi-continuous scan of the LIDAR FOV. In some embodiments, the light deflector, in some embodiments, is during a scanning cycle of the LIDAR FOV the light deflector to be located at a plurality of different instantaneous positions. In some embodiments, during the period of time in which a scanning cycle occurs, the deflector, is moved through a series of different instantaneous positions/orientations. Where the deflector, in some embodiments, reaches each different instantaneous position/orientation at a different time during the scanning cycle.

In some embodiments, navigation system 100, includes one or more processor 126, 119.

For example, in some embodiments, LIDAR system 102 includes processor 126. Where, in some embodiments, processor 126 is housed within housing 152 and/or is hosted by a vehicle to which LIDAR system 102 is attached.

For example, in some embodiments, LIDAR system 102 has connectivity to one or more external processor 119.

For example, where processor 119, in some embodiments is hosted by the cloud.

For example, where processor 119 is a processor of the vehicle to which LIDAR system 102 is attached.

In some embodiments, navigation system 100 includes both an external processor (e.g., hosted by the cloud) and a processor of the vehicle.

In some embodiments, LIDAR system 102 lacks an internal processor 126 and is controlled by external processor 119.

In some embodiments, LIDAR system 102 only includes an internal processor 126.

Processor 126 and/or processor 118, in some embodiments, include a device able to perform a logic operation/s on input/s. Where, in some embodiments, processor/s 118, 126 correspond to physical object/s including electrical circuitry for executing instructions and/or performing logical operation/s. The electrical circuity, in some embodiments, including one or more integrated circuits (IC), e.g., including one or more of Application-specific integrated circuit/s (ASIC), microchip/s, microcontroller/s, microprocessor/s, all or part of central processing unit/s (CPU), graphics processing unit/s (GPU), digital signal processor/s (DSP), field programmable gate array/s (FPGA).

In some embodiments, system includes one or more memory 128. For example, where memory 128 is a part of LIDAR system 102 (e.g., within housing 152). Alternatively or additionally (e.g., to memory 128), in some embodiments, LIDAR system 102 has connectivity to one or more external memory.

In some embodiments, instructions executed by processor 126, 119, are preloaded into memory 128. Where, in some embodiments, memory 128 is integrated with and/or embedded into processor 126.

Memory 128, in some embodiments, comprises one or more of a Random Access Memory (RAM), a Read-Only Memory (ROM), a hard disk, an optical disk, a magnetic medium, a flash memory, a permanent memory, a fixed memory, a volatile memory. In some embodiments, the memory 128 store representative data about one or more objects in the environment (e.g., in one or more measurement FOV) of the LIDAR system.

In some embodiments, navigation system 100 includes one or more user interface 116. Where, in some embodiments, user interface/s 116 display data to user/s (e.g., LIDAR measurement data e.g., navigation instruction/s). Where, in some embodiments, user interface/s 116 receive data from user/s e.g., where a user inputs one or more requirement of navigation system 100 e.g., a destination to be navigated to.

In some embodiments, navigation system 100 includes one or more actuator 114, where actuator/s 114, in some embodiments, control movement of a vehicle e.g., to which LIDAR system 102 is attached.

In some embodiments, processor/s 119, 126 generate control signal/s received by actuator/s 114 for control of movement of the vehicle.

FIG. 1B is a simplified schematic illustrating use of a LIDAR system 101, according to some embodiments of the disclosure.

In some embodiments, LIDAR system 101 includes one or more feature as illustrated in and/or described regarding LIDAR system 102, FIG. 1A.

In some embodiments, LIDAR system 102 is mounted on a vehicle 158 (e.g., mounted to an external surface of vehicle 104 and/or incorporated into a portion of vehicle 104). Where, in some embodiments, LIDAR system 102 is attached to and/or incorporated into (e.g., at least partially recessed into) a bumper, a fender, a side panel, a spoiler, a roof (e.g., as illustrated in FIG. 1B), a headlight assembly, a taillight assembly, a rear-view mirror assembly, a hood, a trunk.

In some embodiments, LIDAR system 101 has a FOV 125, which is, in some embodiments, a region of space in which LIDAR system 101 acquires measurement by emission of light and sensing of reflection/s of the emitted light. In some embodiments, FOV 125 includes one or more feature as described and/or illustrated regarding FOV 125 FIG. 1A.

FOV 125, in some embodiments, extends in a direction generally forwards of vehicle 104 (e.g., in a direction of movement of vehicle 104 and/or extending from vehicle 104 in a direction of a vector connecting the vehicle back to the vehicle front). In some embodiments, FOV 125 extends at an angle θ around vehicle 104. Where θ, in some embodiments, is 60-360°, or 70-180°, or 80-120°, or lower or higher or intermediate ranges or angles.

In some embodiments, FOV 125 is provided by a single scanning unit. Alternatively, in some embodiments, FOV 125 is provided a plurality of scanning units, for example, having FOVs extending in different directions from vehicle 104. In some embodiments, FOV 125 is extended by using multiple LIDAR systems 101. In some embodiments, a single scanning unit extends its FOV by moving e.g., is a rotating scanning unit.

In some embodiments, an extent 150 of FOV 125, extending away from the vehicle in a horizontal direction and/or a direction of a central longitudinal axis 164 of vehicle 104 is 50-500m, or 100-300, or up to 200m, or lower or higher or intermediate distances or ranges.

In some embodiments, a maximal extent 151 of FOV 125, in a vertical direction and/or a direction perpendicular to central longitudinal axis of 164 vehicle 104 is 10-50m, or lower or higher or intermediate distances or ranges.

### Exemplary method

FIG. 2 is a flow chart of a method according to some embodiments of the disclosure.

At 200, in some embodiments, 3D information associated with measurement of a first FOV is received.

In some embodiments, the 3D information includes data acquired from a LIDAR system associated with an FOV, the system, in some embodiments, including one or more feature of LIDAR system 102, FOV 125 FIG. 1A and/or LIDAR system 101, FOV 125 FIG. 1B.

In some embodiments, the 3D information includes a point cloud where each point has a position in a co-ordinate space and represents sensed a reflection of light projected light by the LIDAR system (e.g., a projected light pulse).

At 202, in some embodiments, a first object is identified in the first 3D information. Where, in some embodiments, the first object is a suspected ghost object.

At 204, in some embodiments, second 3D information associated with one or more second object not found and/or not within first the FOV is received. For example, where the 3D information indicates that location/s of the one or more second objects are outside a space of the first FOV).

At 206, in some embodiments, a position of the first object is determined, using the 3D information associated with the one or more second object not found in the first FOV.

### Exemplary multipath object scenarios

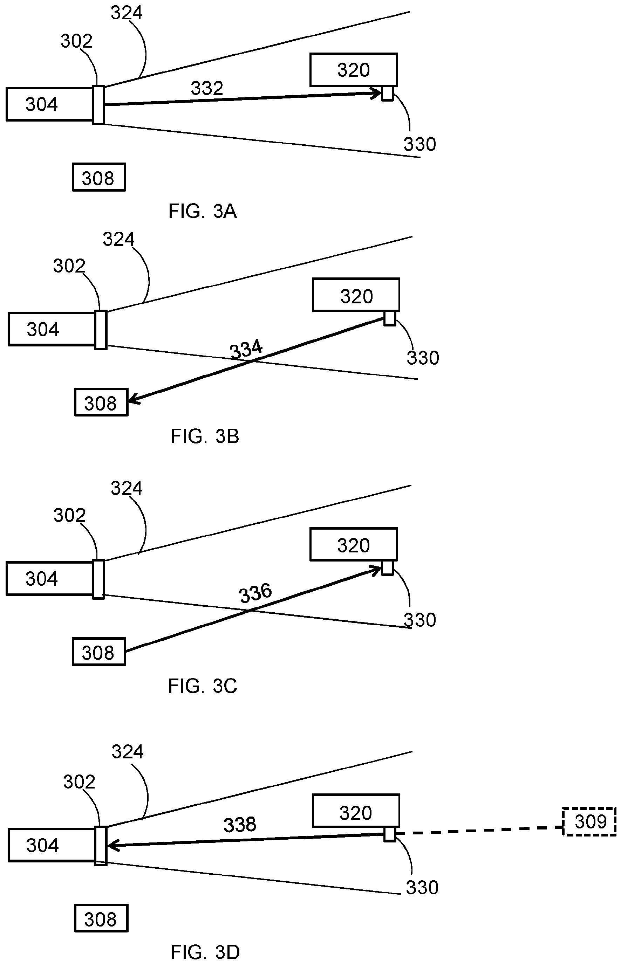

FIGs. 3A-D are simplified schematics of LIDAR light paths 332, 334, 336, 338, according to some embodiments of the disclosure.

Referring now to FIG. 3A, which illustrates, in some embodiments, a vehicle 304 on which a LIDAR system 302 is mounted (and/or is incorporated into). In some embodiments, LIDAR system 302 has a FOV 324, a region of space in which LIDAR system 302 acquires measurement by emission of light and sensing of reflection/s of the emitted light.

Arrow 332, in some embodiments, illustrates a light path of light emitted from LIDAR system 302. In some embodiments, the emitted light is incident on an object 320. Where, in some embodiments, object 320 is another vehicle, e.g., a moving vehicle. In some embodiments, emitted light is incident on a portion 330 of object 320 e.g., a highly reflective portion of object e.g., a mirror surface of object 320.

Referring now to FIG. 3B, in some embodiments, light is reflected from object portion 330 following path 334 to be incident on an aggressor object 308. Where aggressor object 308, in some embodiments, is located outside FOV 324.

Referring now to FIG. 3C, in some embodiments, second object 308 then reflects light back to object portion 330.

Referring now to FIG. 3D, in some embodiments, reflected light incident is then reflected by object portion 330 towards LIDAR system 302 along path 338 being, in some embodiments, detected by LIDAR system 302. Where, based on an assumption that the received light as illustrated in FIG. 3D is light directly reflected by an object generates, in LIDAR system 302 measurement data, a ghost object 309. Where, in some embodiments, ghost object 309 is obstructed from a line of sight of LIDAR system 302, at least partially, by object 320.

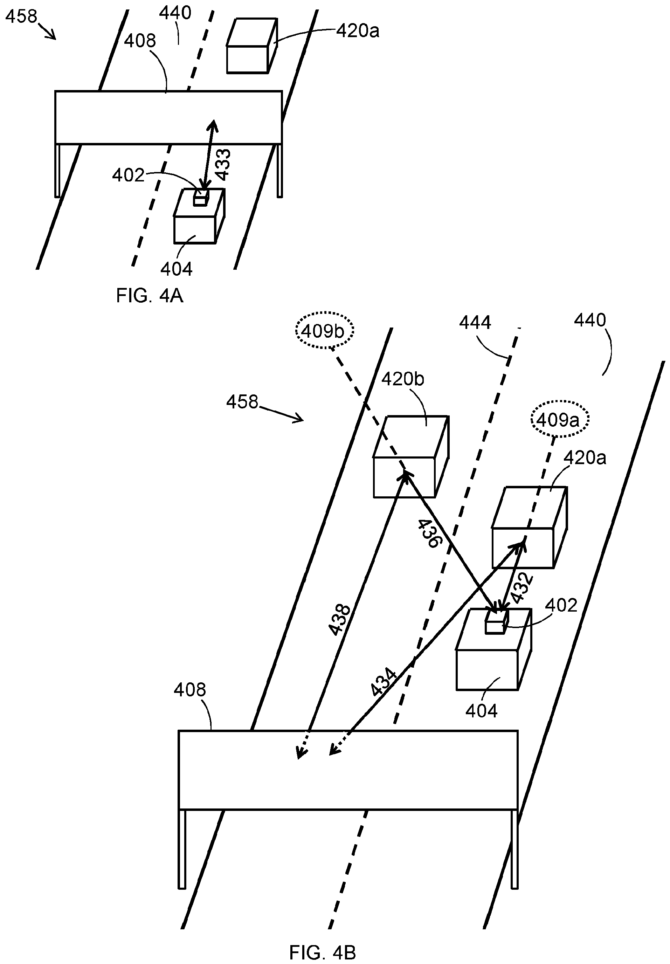

FIGs. 4A-B are simplified schematics of LIDAR light paths 432, 434, 436, 438, according to some embodiments of the disclosure.

In some embodiments, a vehicle 404 to which a LIDAR system 402 is attached (and/or is incorporated into).

In some embodiments, FIG. 4A and FIG. 4B illustrate movement of vehicle 404 through a scene 458 (an environment in which LIDAR system 402 is operating). Where, in some embodiments, FIG. 4A illustrates a position of vehicle 404 within scene 458 prior to that illustrated in FIG. 4B.

In some embodiments, FIG. 4A illustrates positioning of vehicle 404 hosting LIDAR system 402 with respect to an object 408, where object 408 is within a FOV (not illustrated) of vehicle 404; Arrow 433, in some embodiments, illustrates a light path (emission and reflection) from and two LIDAR system 402 where path 433 illustrates light emitted light incident on and reflected by object 408.

In some embodiments, object is a stationary object 408 within scene 458. In some embodiments, scene 458 includes a road 440 and/or object 408 is a gantry sign type of signpost.

Referring now to FIG. 4B, where vehicle 404 has passed object 408. In some embodiments, FIG. 4B illustrates a situation where object 408 is outside of a FOV of LIDAR system 402 (e.g., the FOV extends in a forward direction with respect to the movement of vehicle 404 and/or extends from a location of LIDAR system 402 on vehicle 404 towards a front end of vehicle 404).

FIG. 4B, in some embodiments, illustrates generation of a ghost object 409a in LIDAR measurement data of LIDAR system 402, by reflection at both of an object 420a (which is in some embodiments a vehicle moving in a same direction and/or same side of road 440 as vehicle 404) and object 408 which acts as an "aggressor object".

In some embodiments, outer surfaces of a vehicle provide a reflection in a multi-path reflection. In some embodiments, for example, mirror/s e.g. wing mirror of a vehicle (e.g. due to high reflectivity associated with high spectral reflectivity of the mirror) provide a reflection in a reflection multi-path.

In some embodiments, an above road gantry signpost acts as an aggressor object, for example, associated with high retro-reflectivity of road signs and/or a position of the object above traffic reducing likelihood of intermediate objects preventing the above road gantry signpost from acting as an aggressor.

In some embodiments, object/s with high Lambertian reflectance act as aggressor objects, for example, in some embodiments, road markings (e.g. white road markings) act as aggressors e.g. reflected back to the LIDAR system by door surfaces of a vehicle.

FIG. 4B, in some embodiments, illustrates generation of a ghost object 409b in LIDAR measurement data of LIDAR system 402, by reflection at both of an object 420b (which is in some embodiments a vehicle moving in a different direction and/or different side of road 440 as vehicle 404) and object 408 which acts as an "aggressor object".

Exemplary aggressor objects include signposts, gantry signposts, vehicles, a road central barrier, road markings (e.g., road marking being reflected in a door of a vehicle to the LIDAR system).

FIGs. 4A-B illustrate an exemplary ghost object 409a, 409b scenario where one of the reflecting objects is in motion 402a, 402b, and one of the objects is stationary 408 resulting in moving ghost objects 409a, 409b. However, in some embodiments, both of the reflecting objects are moving and, in some embodiments, both of the reflecting objects are stationary. For example, where a central barrier 444 of road 440, in some embodiments, forms a first reflecting object and sign 408 forms a second reflecting object.

### Exemplary detailed method

FIG. 5 is a flow chart of a method of navigation measurement data processing, according to some embodiments of the disclosure.

It should be understood, regarding the method of FIG. 5 and/or feature/s of the method and/or combinations of feature/s of the method that although the method is described in the context of receiving point clouds and generating and updating object models which then, in some embodiments are used for navigation, that, in some embodiments, different option/s regarding where point clouds are used and where object models are used are encompassed and envisioned by embodiments of this disclosure.

For example, in some embodiments, the method (e.g., the entire method) is performed in a point cloud domain where characterizing of objects includes characterizing point/s and/or clusters of points and/or where updating includes, for example, removing point/s and/or clusters of points. Where, after characterizing and/or updating the point cloud e.g., to remove ghost objects, in some embodiments, the point cloud is directly provided e.g., for use in navigation of a host vehicle. Optionally, in some embodiments, after characterizing and/or updating the point cloud, it is used to generate an object model which is then provided e.g., for use in navigation of a host vehicle.

For example, in some embodiments, the method (e.g., the entire method) is performed in an object model domain, where point cloud/s are processed to generate object models, objects of the object model then being characterized and/or updated (e.g., to remove ghost object/s). In some embodiments, e.g., after characterizing and/or updating the object model, it is provided e.g., for use in navigation of a host vehicle. In some embodiments, e.g., after characterizing and/or updating the object model, it is used to generate point cloud/s which are then provided e.g., for use in navigation of the host vehicle.

In some embodiments, classification of objects is performed in an object model domain, and a point cloud is then updated based on the classification (e.g., to remove ghost objects) where the point cloud is then provided e.g., to be used for navigation.

At 500, in some embodiments, 3D information regarding a FOV is received.

In some embodiments, the 3D information is associated with measurements of the FOV acquired using a LIDAR system. Where, in some embodiments, the LIDAR system is mounted on and/or installed in the vehicle. The LIDAR system, in some embodiments, including one or more feature as illustrated in and/or described regarding LIDAR system 102 FIG. 1A. The LIDAR system and/or host vehicle, in some embodiments, including one or more features as illustrated in and/or described regarding LIDAR system 102, vehicle 104 FIG. 1B.

In some embodiments, data is received, alternatively or additionally, from one or more other source than the vehicle. For example, where, in some embodiments, data acquired by one or more other vehicle is received, e.g., directly (vehicle to vehicle data sharing) and/or via an intermediate data sharing platform.

In some embodiments, data from other data source/s is received. For example, previously acquired mapping data of aggressor objects.

In some embodiments, data from one or more additional sensor is received, for example, radar data, image data.

In some embodiments, data received from additional source/s is processed e.g., for combination with received LIDAR data from the system mounted on the vehicle. For example, processed to add point cloud data points to the received LIDAR data point cloud.

In an exemplary embodiment, the 3D information includes a point cloud of data points located within a coordinate space. In some embodiments, the point cloud is a 3D model generated using LIDAR system measurement data. For example, where, one or more of the points in the point cloud model (e.g., each point) is generated by emitting laser light (e.g., laser light pulse) at a known time in a known direction and sensing a reflection of the emitted light, a delay between emitting and sensing, in some embodiments, providing a distance away of the point cloud (e.g., from a reference position in the point cloud coordinate space) e.g., along a line of sight of the emission.

In some embodiments, the point cloud includes a set of data points located spatially in a coordinate system (i.e., having an identifiable location in a space described by a respective coordinate system). The term "point cloud point" refers to a point in space (which, in some embodiments, is dimensionless, and/or describes a cellular space, e.g., 1 cm³). Where, in some embodiments, a point cloud point's location in space, is described by the point cloud model using a set of coordinates (e.g., (X,Y,Z), (r,φ,θ)).

Optionally, in some embodiments, the point cloud model, stores additional information for some or all of its points (e.g., one or more of color information for points generated from camera images, gazing angle, reflectivity of the point).

The terms "point cloud" and "point cloud model", in some embodiments include a set of data points located spatially in a coordinate system (i.e., having an identifiable location in a space described by a respective coordinate system). The term "point cloud point" refers to a point in space (which, in some embodiments, is dimensionless, and/or a cellular space, e.g., 1 cm³), and whose location, in some embodiments, be described by the point cloud model using a set of coordinates (e.g., (X,Y,Z), (r,φ,θ)). By way of example only, the point cloud model, in some embodiments, stores additional information for some or all of its points (e.g., color information for points generated from camera images).

The LIDAR system, in some embodiments, determines a distance between a pair of tangible objects e.g., based on reflected light. In one example, the LIDAR system processes detection results of a sensor which creates temporal information indicative of a period of time between the emission of a light signal and the time of its detection by the sensor. The period of time, in some embodiments, is referred to as a "time of flight" of the light signal.

In some embodiments, the light signal is a short pulse whose rise and/or fall time, is detected in reception. For example, using known information about the speed of light in a relevant medium (e.g., air), information regarding the time of flight of the light signal, in some embodiments, is processed to provide a distance the light signal traveled between emission and detection.

In some embodiments, the distance is determined based on frequency phase-shift (e.g., multiple frequency phase-shift). In some embodiments, information indicative of one or more modulation phase shifts is processed (e.g., by solving simultaneous equations to give a final measure) of the light signal.

For example, the emitted optical signal, in some embodiments, is modulated with one or more constant frequencies. In some embodiments, at least one phase shift of a modulation between the emitted signal and the detected reflection, is considered to be indicative of the distance the light traveled between emission and detection. The modulation, in some embodiments, is applied to a continuous wave light signal, and/or to a quasi-continuous wave light signal.

In some embodiments, additional information, is used for determining a distance, e.g., location information (e.g., relative positions) between a projection location and a detection location of the signal (e.g., when distanced from one another).

At 502, in some embodiments, one or more objects are identified within the received 3D information.

Where, in some embodiments, objects are identified in the point cloud/s using one or more object identification techniques e.g., clustering technique/s and/or neural network technique/s. Optionally, in some embodiments, an object model is generated using the identified objects in the point cloud/s.

In some embodiments, for example, prior to and/or during identifying objects noise is removed. Where, for example, in some embodiments, single point objects are assumed to be noise removed and/or disregarded. Where a single point object is one separated over a threshold distance from points in one or more direction (e.g., in all directions).

In some embodiments, high reflectivity (e.g., over a threshold) single points in the point cloud are not disregarded and are checked as potential aggressors.

At 504, in some embodiments, one or more object/s identified at step 508 are categorized.

Optionally, in some embodiments, object/s of object model are categorized.

Where categorizing, for example, is as relevant to navigation e.g., deemed to be an obstacle and/or potential obstacle to the vehicle e.g., delineating relevant information for navigation. For example, as irrelevant to navigation e.g., too distant, too small, travelling away from the vehicle (e.g., more rapidly than the vehicle is travelling towards the object).

Where, in some embodiments, the object is categorized as to whether it is a potential aggressor object (e.g., the categorization including a likelihood of aggressor behavior). For example, according to one or more feature as illustrated in and/or described regarding FIG. 6A.

At 506, in some embodiments, the object model is updated with object categorizations, for example, including categorization of one or more object as a potential aggressor object.

At 508, in some embodiments, objects are checked, to identify ghost object/s using categorized potential aggressor objects.

At 510, in some embodiments, based on characterization of multi-path objects, the object model is updated. For example, where identified ghost objects are removed from the navigation model.

At 512, in some embodiments, an object model (and/or point cloud/s) where multi-path objects have been removed is supplied to a navigation system e.g., for navigation of a vehicle.

For example, for determining a planned trajectory of the vehicle with time, e.g., for a time period. Where, in some embodiments, during the navigation, additional 3D measurement information is received e.g., at step 500. Navigation being, in some embodiments, an iterative process where data is acquired as the vehicle moves, and the acquired data is used to control future movement of the vehicle.

At 514, in some embodiments, additional 3D measurement information is received. For example, including measurement of a different FOV (e.g., including at least a portion which does not overlap with a set of measurement information received previously and most recently).

At 516, in some embodiments, tracking information for movement of the vehicle to which the LIDAR system acquiring the data is mounted, between previously acquired 3D measurement information (e.g., measurement of previous FOV/s) and 3D measurement information received at step 500 is received.

Where, in some embodiments, movement information includes speed and/or direction of movement of the vehicle and/or LIDAR system. Where, in some embodiments, movement information is determined from measurement data (e.g., accelerometer data) and/or using positioning data (e.g., GNSS data) and/or using odometry data (e.g., received from the vehicle system/s). In some embodiments, movement information is determined for one or more object and/or landmark, identifying the same stationary object in 3D information received at different times (e.g., 3D information at different but overlapping FOVs e.g., at known times) relative movement of which object/s, in some embodiments, is used to determine speed of movement of the vehicle and/or LIDAR system. Other methods of determining speed of the host vehicle e.g., known in the art of vehicular navigation and/or perception system/s are envisioned and encompassed by embodiments of this disclosure.

At 518, in some embodiments, objects in the second 3D information are identified. For example, according to one or more feature of step 502. Where, in some embodiments, objects are added to the previous object model e.g., using the movement information to position newly identified objects with respect to the objects existing in the object model.

At 520, optionally, in some embodiments, the object model (or point cloud) is updated using the movement information received at step 515. For example, to update positions of the potential aggressor objects with respect to the vehicle and/or LIDAR system. Where model includes velocity of objects, if moving, in some embodiments, the moving objects are updated in the object model using a last known velocity of the object.

In some embodiments, updating of the object model includes determining which objects should remain in the model and which should be removed. For example, in some embodiments potential aggressor objects far away from (e.g., at above a threshold distance from) the LIDAR system are removed from the potential aggressor object model. In some embodiments, the threshold distance is determined based on intensity of the illumination, and/or a range of the LIDAR system.

In some embodiments, different types of potential aggressor are maintained for different time duration/s and/or distance/s from the LIDAR system and/or host vehicle.

In some embodiments, single point potential aggressors are maintained for determining ghost objects for a shorter time than those aggressor objects associated with a cluster of point cloud points.

In some embodiments, for example, as the LIDAR system continues to acquire data and/or move through space, steps 504-520 are repeated e.g., continually and/or periodically.

### Exemplary methods of aggressor object identification

FIG. 6A is a flow chart of a method of potential aggressor object identification, according to some embodiments of the disclosure.

At 601, in some embodiments, 3D measurement data to be checked for a likelihood that it is or will be an aggressor object is received.

In some embodiments, the data includes LIDAR measurement data (e.g., one or more point cloud).

Alternatively or additionally, in some embodiments, the data includes data derived from LIDAR measurement data, for example, where the data includes an object model which was generated by processing one or more LIDAR data frame.

Alternatively or additionally, in some embodiments, the data includes data from another source for example, radar data, image data, mapping data.

For example, real time image data, e.g., received from one or more of imager/s hosted by the vehicle and/or from imager/s in the scene (e.g., stationary imager/s and/or imager/s hosted by other vehicles).

For example, previously generated data, e.g., map/s, satellite image/s, previously acquired images (e.g., acquired by a vehicle at a different time, but a similar location)

In some embodiments, data received from additional source/s is processed e.g., for combination with received LIDAR data from the system mounted on the vehicle. For example, processed to add point cloud data points to the received LIDAR data point cloud.

Alternatively or additionally to directly incorporating the additional data into point cloud/s the data from additional source/s is used to verify and/or adjust feature/s (e.g., one or more of size, movement feature/s, reflectivity) of the object identified in the LIDAR data.

In some embodiments, the 3D measurement data includes an identified object.

Where, in some embodiments, the data received includes a cluster of points e.g., of a point cloud identified as being associated with an object.

In some embodiments, one or more point cloud is received (e.g., as opposed to just object points from the point cloud). Where, in some embodiments, one or more object (e.g., each object) from the point cloud is evaluated for aggressor object status.

Alternatively or additionally, in some embodiments, the data received includes a model of an object e.g., determined from the point cloud. In some embodiments, the data received includes an object model, including models of a plurality of objects where, in some embodiments, one or more object (e.g., each object) from the object model is evaluated for aggressor object status.

At 602, in some embodiments, the object is evaluated. Where one or more feature of the object is used to characterize if the object is a potential aggressor. In some embodiments, evaluation produces a Boolean false or true 609 regarding aggressor object status. In some embodiments, evaluation includes determining a quantification 609 regarding how aggressive (e.g., likelihood the object will behave as an aggressor) the object is. Where, optionally, in some embodiments, different evaluated features contribute different weights to the quantification.

In some embodiments, evaluation includes one or more of steps 603, 605, and 607. Which, in some embodiments, include evaluation of LIDAR data regarding the object and/or other data received (e.g., data received from another data source e.g. as described regarding step 601).

At 603, in some embodiments, reflectivity of the object is evaluated. For example, reflectivity of individual point/s of a point cloud and/or collective reflectivity of a plurality of points e.g., all of the points in the object e.g., subset/s of points in the object. For example, reflectivity characteristic/s of the object model.

In some embodiments, the object is characterized as being a potential aggressor, based on reflectivity e.g., alone. In some embodiments, one or more additional feature of the object is used to determine if it is a potential aggressor. In an exemplary embodiment, reflectivity is a feature from a plurality of features where each feature has a weighting in a decision regarding whether the object is a potential aggressor.

In some embodiments, type of reflectivity and/or contribution to reflectivity from different types from the object is used in the evaluation e.g., Lambertian, retroreflective, spectrally reflective.

At 605, size and/or position of the object is evaluated. For example, where a plurality of points of the point cloud are used to determine object size and/or position e.g., with respect to other identified object/s in the point cloud/s received.

At 607, in some embodiments, an object type is determined. For example, using one or more feature of the object model and/or object point cloud points. Where, in some embodiments, particular object types are deemed to be more likely to be aggressor objects, and receive a higher weighting e.g., for combined feature evaluation.

In some embodiments, potential aggressor objects are identified by identifying object types e.g., using size and/or shape and/or intensity of sensed reflected signal/s in LIDAR measurement/s of the object.

For example, signposts, where in some embodiments, object recognition of an object as a signpost includes identifying a board, for example as set of points that fits to a plane (e.g., with an error under a threshold).

In some embodiments, overhead gantry signposts are given a high weighting as potential aggressors. In some embodiments, an above-road sign gantry is identified based on reflectivity (high) size (larger than other signposts) and/or shape, and/or location (e.g., with respect to other object/s e.g., at above a threshold height above the road). In an exemplary embodiment, above-road sign gantries are identified as high reflectivity boards that are under-drivable.

In some embodiments, (for example, where measured reflectivity is not used and/or has low weighting for characterizing) specific types of object are considered to be potential aggressors e.g., object types which usually have high reflectivity.

For example, in some embodiments, signposts are known to have high reflectivity and objects fulfilling size and/or shape and/or position with respect to other object/s in the scene are used to identify sign post objects. Where, once identified as a signpost, the object is deemed to be likely to be a potential aggressor.

In some embodiments, potential aggressor object types include objects assumed to be highly reflective and/or retroreflective surfaces e.g., motor vehicle/s, signposts, road dividing barriers.

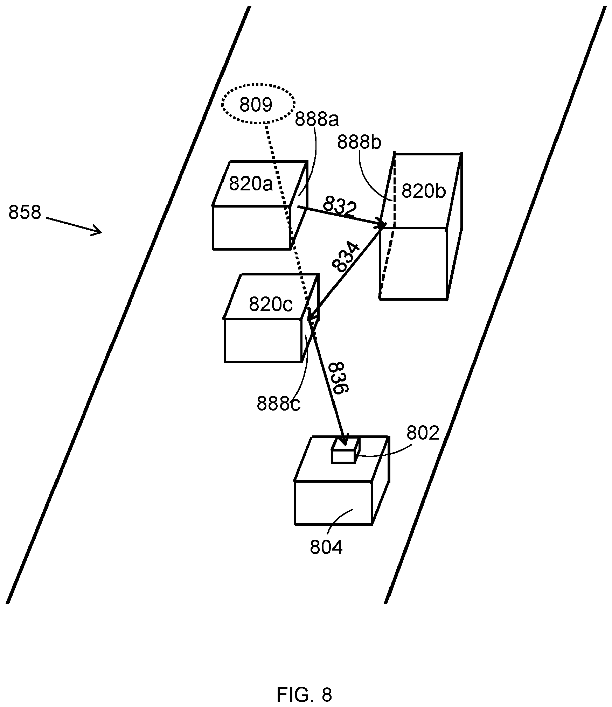

In some embodiments, a partially visible or non-visible portion (e.g., one or more surface) of an object is characterized as an aggressor object. For example, as illustrated in FIG. 8. For example, in one or more LIDAR data set. Where, in some embodiments, an identified object is characterized as being a particular object type which is assumed to have one or more surface which is a potential aggressor surface (e.g., even if the surface is not visible). Feature/s (e.g., one or more of size, orientation with respect to visible portion/s of the object, reflectivity) of the potential aggressor surface/s may be assumed and/or determined, for example, based on visible portion/s of the object and/or other feature/s of the object. For example, according to one or more feature of an object model e.g. a model for the object type.

FIG. 8 is a simplified schematics of LIDAR light paths 832, 834, 836, according to some embodiments of the disclosure.

In some embodiments, a vehicle 804 to which a LIDAR system 802 is attached (and/or is incorporated into) is within (e.g., moving through) a scene 858 (an environment in which LIDAR system 802 is operating).

FIG. 8, in some embodiments, illustrates generation of a ghost object 809 in LIDAR measurement data of LIDAR system 802, by a multi-path reflection along paths 834, 834, 836. Where reflections of the multi-path are provided by a plurality of aggressor surfaces 888a, 888b, 888c on aggressor objects 820a, 820b, 820c respectively. Where only the return path of the LIDAR light is illustrated in FIG. 8.

In some embodiments, an aggressor surface 888b is not within a FOV of system 802 (e.g. is not visible and/or along a straight line of sight from system 802).

In some embodiments, for example, as other portions of object 820b are visible, existence and/or other feature/s of aggressor surface 888b are inferred, e.g., from visible portion/s of object 820b and/or context of object 888b within scene 858, in one (e.g., only one) or more LIDAR data set.

FIG. 6B is an illustration showing potential aggressor object identification, according to some embodiments of the disclosure.

Where, in some embodiments, the illustration shows a scene in which a vehicle having a LIDAR system is moving. Where, in some embodiments, points of the data cloud are visible as points in the illustration. FIG. 6B in some embodiments, also illustrates bounding boxes and/or other bounding shapes of identified objects 620, 642, 640, 608.

For example object 608, which in some embodiments, is an overhead sign, having a large planar bounding shape. In some embodiments, projected feature/s of an object are illustrated. For example, for moving objects, projected direction and/or speed of movement of the object e.g., for object 620, as illustrated by lines 666 in FIG. 6A.

In some embodiments, once an object is categorized as a certain object type, projected feature/s of the object follows one or more rule for that object type. For example a surface identified as being a reflective rear surface of a vehicle, in some embodiments, is modeled as a cuboid object (e.g., having standard dimensions and/or having dimensions according to dimensions of the surface). For example, for stationary scene objects which extend outside of a measurement FOV, in some embodiments, have a projected future spatial e.g., where road edge/s 640, 642 and/or a central reservation 668 have projected future position/s e.g., illustrated on FIG. 6B as line structures superimposed on points of the point cloud.

### Exemplary method of suspicious object classification

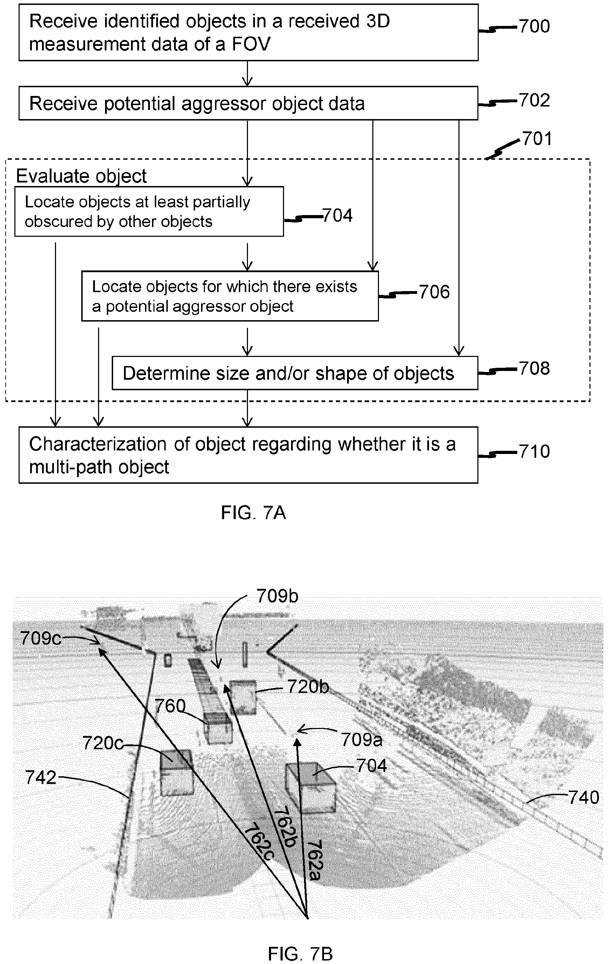

FIG.7A is a flow chart of a method of suspected ghost object identification, according to some embodiments of the disclosure.

At 700, in some embodiments, data for identified objects is received e.g., an object model is received e.g., a point cloud and/or set of point clouds.

Where, in some embodiments, the identified objects are those identified from 3D measurement data of a FOV (e.g., according to one or more features of step 502 FIG. 5).

At 702, optionally, in some embodiments, potential aggressor object data is received.

In some embodiments, both data for identified objects a potential aggressor object data is received (e.g., in the form of an object model and/or point cloud/s) which includes categorizations of one or more objects in the object model as potential aggressor objects and/or categorizations as to likelihood of the object/s being aggressor object/s.

Where exemplary characterization of objects as aggressor objects is according to one or more feature as illustrated in and/or described regarding FIG. 6A.

At 701, one or more object is evaluated regarding e.g., to produce a characterization 710 as to whether it is a multi-path object or not and/or a likelihood of whether it is a multi-path object. In some embodiments, the evaluating includes evaluating one or more feature of the object and/or related to the object. In some embodiments, evaluation produces a Boolean false or true 710 regarding multi-path object status. In some embodiments, evaluation includes determining a quantification 710 regarding likelihood the object is a multi-path object. Where, optionally, in some embodiments, different evaluated features contribute different weights to the quantification.

In some embodiments, evaluation includes one or more of steps 704, 706, and 708. In some embodiments, evaluation steps are performed sequentially. In some embodiments, if evaluation at one step (or less than all of 704, 706, 708) provides a strong indication of multi-path or non multi-path evaluation, the particular object is characterized based on the evaluation already performed and subsequent evaluation steps are not performed.

For example, in some embodiments, objects of the data received are screened by determining if they are obscured by another object and those which are not obscured (or have low levels of being obscured) are designated as real objects and are not processed further regarding multi-path feature/s.

Where the order of steps illustrated in FIG.7A is exemplary and other orders are envisioned and encompassed by embodiments of this disclosure.

At 704, in some embodiments, from the identified object data, objects at least partially obscured by other objects are identified as suspected ghost objects. In some embodiments, an extent of obscuring is determined and/or a likelihood that the object is obscured is determined. Where, in some embodiments, the extent and/or likelihood is quantified.

Without wanting to be bound by theory, it is theorized, for a multi-path object to be sensed, a final reflection along the multi-path is provided by an object in a line-of-sight of the LIDAR system e.g., an object which obscures the multi-path object along the line-of-sight of the LIDAR system.

At 706, in some embodiments, from the identified object data and, optionally including classification as to which objects are potential aggressor objects for which there exists a potential aggressor object are identified. In some embodiments, a likelihood (e.g., quantification) of the potential aggressor object being an aggressor for the suspected multi-path object is determined.

In some embodiments, when checking for aggressor objects, those potential aggressor objects characterized as highly likely to be aggressor objects are checked first, followed by objects less likely to be aggressor objects.

At 708, in some embodiments, size and/or shape of object/s are assessed to provide a likelihood (e.g., quantification) of the object, based on the size and/or shape of the object, being a ghost object.

In some embodiments, some inputs have a greater weight for determining the ghost or non-ghost status of the object. Where, for example, in some embodiments, a confidence level as to whether the object is a ghost object is output, in some embodiments, some inputs are weighted to contribute to the confidence level more than other levels. Where, in an exemplary embodiment, more highly weighted inputs include existence of a matching aggressor object and a level of obscuring of the ghost object. Where, in an exemplary embodiment, a most highly weighted input is existence of a matching aggressor object.

FIG. 7B is an illustration showing suspected ghost object identification, according to some embodiments of the disclosure.

Where, in some embodiments, the illustration shows a scene in which a vehicle with a LIDAR system is moving. Where, in some embodiments, points of the data cloud are visible as points in the illustration. FIG. 7B in some embodiments, also illustrates bounding boxes of identified objects 704, 742, 740, 760e.g. to illustrate position of the objects (e.g., more clearly than just the points of the point cloud). In some embodiments, objects 704, 704, 706, 760 are vehicles.

FIG. 7B, in some embodiments, illustrates suspected ghost objects, clusters of data points 709a, 709b, 709c. Where each suspicious cluster is 709a, 709b, 709c obscured from a line of sight of the LIDAR system by a corresponding object 720a, 720b, 720c respectively. Where LIDAR system lines of sight are illustrated in FIG. 7B by arrows 762a, 762b, 762c.

### General

It is expected that during the life of a patent maturing from this application many relevant LIDAR technologies will be developed and the scope of the term "LIDAR" is intended to include all such new technologies a priori.

As used within this document, the term "about" refers to±20%

The terms "comprises", "comprising", "includes", "including", "having" and their conjugates mean "including but not limited to".

The term "consisting of" means "including and limited to".

As used herein, singular forms, for example, "a", "an" and "the" include plural references unless the context clearly dictates otherwise.

Within this application, various quantifications and/or expressions may include use of ranges. Range format should not be construed as an inflexible limitation on the scope of the present disclosure. Accordingly, descriptions including ranges should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within the stated range and/or subrange, for example, 1, 2, 3, 4, 5, and 6. Whenever a numerical range is indicated within this document, it is meant to include any cited numeral (fractional or integral) within the indicated range.

It is appreciated that certain features which are (e.g., for clarity) described in the context of separate embodiments, may also be provided in combination in a single embodiment. Where various features of the present disclosure, which are (e.g., for brevity) described in a context of a single embodiment, may also be provided separately or in any suitable sub-combination or may be suitable for use with any other described embodiment. Features described in the context of various embodiments are not to be considered essential features of those embodiments unless the embodiment is inoperative without those elements.

Although the present disclosure has been described in conjunction with specific embodiments thereof, it is evident that many alternatives, modifications, and variations will be apparent to those skilled in the art. Accordingly, this application intends to embrace all such alternatives, modifications and variations that fall within the spirit and broad scope of the appended claims.

All references (e.g., publications, patents, patent applications) mentioned in this specification are herein incorporated in their entirety by reference into the specification, e.g., as if each individual publication, patent, or patent application was individually indicated to be incorporated herein by reference. Citation or identification of any reference in this application should not be construed as an admission that such reference is available as prior art to the present disclosure. In addition, any priority document(s) and/or documents related to this application (e.g., co-filed) are hereby incorporated herein by reference in its/their entirety.

Where section headings are used in this document, they should not be interpreted as necessarily limiting.

Various aspects and embodiments of the present invention are defined by the following numbered clauses:
1. A method of processing of LIDAR measurement data comprising:
   receiving successive LIDAR 3D data sets over a time from a LIDAR system moving, during said time, through space, each LIDAR 3D data set corresponding to a measurement field of view (FOV) of said LIDAR system;
   identifying a plurality of objects in said LIDAR 3D data sets;
   designating at least one of said plurality of objects as at least one potential aggressor object;
   tracking position of said one or more potential aggressor objects relative to said LIDAR system as said one or more potential aggressor objects move outside of said measurement FOV of said LIDAR system; and
   characterizing one or more of said plurality of objects as one or more multi-path object using tracked position of said one or more potential aggressor objects.
2. The method according to clause 1, wherein said identifying one or more potential aggressor objects comprises identifying an object having high reflectivity.
3. The method according to any one of clauses 1-2, wherein identifying one or more potential aggressor objects comprises identifying an object type.
4. The method according to clause 3, wherein said identifying object types includes using one or more of LIDAR signal measurement intensity, object size, object position with respect to said LIDAR system, and object position with respect to other identified objects.
5. The method according to any one of clauses 1-4, wherein identifying one or more potential aggressor objects comprises determining a likelihood that an object of said plurality of objects is a potential aggressor object.
6. The method according to clause 5, wherein said determining comprises using weighted evaluations of a plurality of features of said one or more potential aggressor objects.
7. The method according to clause 6, wherein said plurality of features includes a reflectivity and an object type.
8. The method according to clause 7, wherein said object type is a signpost object type.
9. The method according to clause 7, wherein said object type is an overhead gantry signpost object type identified as a planar object located at over a threshold height above said LIDAR system.
10. The method according to any one of clauses 1-9, wherein said characterizing comprises identifying one or more objects of said plurality of objects which is at least partially obscured by an obscuring object of said plurality of objects.
11. The method according to clause 10, wherein said one or more objects is at least partially obscured by said obscuring object along a measurement line of sight of said LIDAR system.
12. The method according to any one of clauses 10-11, wherein said characterizing comprises identifying an object of said plurality of objects for which a position of said object, a position of said at least one potential aggressor object, a position of said obscuring object, and a position of said LIDAR system correspond to a possible reflection multipath for said LIDAR system.
13. The method according to any one of clauses 10-12, wherein said characterizing comprises identifying one or more object which is at least partially obscured, in a plurality of said 3D LIDAR sets, by said obscuring object.
14. The method according to any one of clauses 10-12, wherein said characterizing comprises identifying one or more object which moves at a corresponding velocity to movement of said obscuring object.
15. The method according to any one of clauses 1-14, comprising removing said multi-path objects from said LIDAR 3D data sets.
16. The method according to clause 15, comprising providing said LIDAR 3D data sets to a navigation system.
17. The method according to any one of clauses 1-14, wherein said identifying comprises generating an object model using said identified objects.
18. The method according to clause 17, comprising removing said multi-path objects from said object model.
19. The method according to any one of clauses 17-18, comprising providing said object model to a navigation system.
20. The method according to any one of clauses 1-19, wherein said tracking comprises receiving a trajectory of said LIDAR system.
21. The method according to clause 20, wherein said receiving a trajectory comprises receiving movement sensor data and determining a trajectory of said LIDAR system using said sensor data.
22. The method according to any one of clauses 20-21, comprising:
   determining a change in position of stationary objects, in said successive LIDAR 3D data sets; and
   wherein said determining said trajectory comprises using said change in position.
23. The method according to any one of clauses 1-22, wherein said successive LIDAR 3D data sets include at least two LIDAR 3D data sets.
24. The method according to any one of clauses 1-23, wherein said data sets each comprise a point cloud, each point in said point cloud corresponding to a determined location, from LIDAR sensor data, of a surface of a reflecting object.
25. The method according to any one of clauses 1-24, wherein said moving comprises non-continuous movement of said LIDAR system.
26. A LIDAR navigation system comprising:
   one or more light source;
   one or more light sensor;
   a processor operatively connected to said light source and said light sensor configured to:
      control emission of light from said light source to scan a measurement field of view (FOV);
      generate LIDAR 3D data sets over a time, using sensor measurements received by said one or more light sensor where each LIDAR 3D data set corresponds to said measurement FOV;
      identify objects in said LIDAR 3D data sets to provide one or more identified objects;
      designate one or more of said identified objects as one or more potential aggressor objects;
      track position of said one or more potential aggressor objects as they move outside of a measurement FOV of said LIDAR system; and
      characterize one or more of said identified objects as ghost objects using tracked position of said one or more potential aggressor objects.
27. A method of processing of LIDAR measurement data comprising:
   receiving a first LIDAR 3D data set corresponding to a first measurement field of view (FOV) of said LIDAR system;
   identifying one or more objects measured in said first LIDAR 3D data set;
   characterizing said one or more objects as one or more aggressor objects or non-aggressor objects;
   tracking a position, with regards to said LIDAR system, of said one or more aggressor objects;
   receiving a second LIDAR 3D data set corresponding to a second measurement FOV of said LIDAR system, where said position of said one or more aggressor objects is outside of said second measurement FOV;
   identifying at least one object measured in said second LIDAR 3D data set;
   determining if said at least one object is a ghost object, not corresponding to a real object, using said position of said one or more aggressor objects.
28. A method of processing of LIDAR measurement data comprising:
   receiving successive LIDAR 3D data sets, each LIDAR 3D data set corresponding to a measurement field of view (FOV) of said LIDAR system;
   identifying a plurality of objects measured in said LIDAR 3D data sets;
   characterizing at least a portion of said plurality of objects as aggressor objects or non-aggressor objects;
   generating a model comprising positions, with regards to said LIDAR system, of said plurality of objects over time, including determined position of said at least a portion of said plurality of objects characterized as aggressor objects outside of said FOV of said LIDAR system;
   determining if one or more of said plurality of objects of said model is a ghost object, failing to correspond to a real object, using said determined position of said one or more objects characterized as aggressor objects.
29. A method of processing of LIDAR measurement data comprising:
   receiving a LIDAR 3D data set from a LIDAR system set corresponding to a measurement field of view (FOV) of said LIDAR system;
   identifying a plurality of objects in said LIDAR 3D data set;
   identifying one or more potential aggressor object by inferring a position of said one or more potential aggressor objects outside said measurement FOV;
   characterizing one or more of said plurality of objects as one or more multi-path object using said position of said one or more potential aggressor objects.
30. The method according to clause 29, wherein said inferring comprises using one or more feature of said plurality of objects.
31. The method according to any one of clauses 29-30, wherein said a potential aggressor object of said one or more potential aggressor objects is a surface of one of said plurality of objects which does not appear in said FOV; and
   wherein said inferring said position is using one or more feature of said one of said plurality of objects.
32. The method according to any one of clauses 29-30, comprising receiving additional data regarding one or more of said plurality of objects;
   wherein said inferring said position of said one or more potential aggressor objects is using said additional data.
33. The method according to clause 32, wherein said additional data comprises image data.
34. A LIDAR navigation system comprising:
   one or more light source;
   one or more light sensor;
   a processor operatively connected to said light source and said light sensor configured to:
      control emission of light from said light source to scan a measurement field of view (FOV);
      generate LIDAR 3D data sets over a time, using sensor measurements received by said one or more light sensor where each LIDAR 3D data set corresponds to said measurement FOV; and
      the methods of any of the clauses 1 to 25, and 27 to 33.

## Claims

1. A method of processing of LIDAR measurement data comprising:
receiving successive LIDAR 3D data sets over a time from a LIDAR system moving, during said time, through space, each LIDAR 3D data set corresponding to a measurement field of view (FOV) of said LIDAR system;
identifying a plurality of objects in said LIDAR 3D data sets;
designating at least one of said plurality of objects as at least one potential aggressor object;
tracking position of said one or more potential aggressor objects relative to said LIDAR system as said one or more potential aggressor objects move outside of said measurement FOV of said LIDAR system; and
characterizing one or more of said plurality of objects as one or more multi-path objects using tracked position of said one or more potential aggressor objects.

2. The method according to claim 1, wherein said identifying one or more potential aggressor objects comprises at least one of:
identifying an object having high reflectivity,
identifying an object type, said identifying object types typically including using one or more of LIDAR signal measurement intensity, object size, object position with respect to said LIDAR system, and object position with respect to other identified objects, and,
determining a likelihood that an object of said plurality of objects is a potential aggressor object, wherein said determining typically comprises using weighted evaluations of a plurality of features of said one or more potential aggressor objects, said plurality of features typically including a reflectivity and an object type, said object type typically being one of a signpost object type and an overhead gantry signpost object type identified as a planar object located at over a threshold height above said LIDAR system.

3. The method according to any one of claims 1-2, wherein said characterizing comprises identifying one or more objects of said plurality of objects which is at least partially obscured by an obscuring object of said plurality of objects.

4. The method according to claim 3, wherein said one or more objects is at least partially obscured by said obscuring object along a measurement line of sight of said LIDAR system.

5. The method according to any one of claims 3-4, wherein said characterizing comprises at least one of:
identifying an object of said plurality of objects for which a position of said object, a position of said at least one potential aggressor object, a position of said obscuring object, and a position of said LIDAR system correspond to a possible reflection multipath for said LIDAR system,
identifying one or more object which is at least partially obscured, in a plurality of said 3D LIDAR sets, by said obscuring object, and
identifying one or more object which moves at a corresponding velocity to movement of said obscuring object.

6. The method according to any one of the preceding claims, comprising removing said multi-path objects from said LIDAR 3D data sets.

7. The method according to claim 6, comprising providing said LIDAR 3D data sets to a navigation system.

8. The method according to any one of the preceding claims, wherein said identifying comprises generating an object model using said identified objects.

9. The method according to claim 8, comprising at least one of:
removing said multi-path objects from said object model, and
providing said object model to a navigation system.

10. The method according to any one of the preceding claims, wherein said tracking comprises receiving a trajectory of said LIDAR system, said receiving a trajectory typically comprising receiving movement sensor data and determining a trajectory of said LIDAR system using said sensor data.

11. The method according to claim 10, comprising:
determining a change in position of stationary objects, in said successive LIDAR 3D data sets; and
wherein said determining said trajectory comprises using said change in position.

12. The method according to any one of the preceding claims, wherein said successive LIDAR 3D data sets include at least two LIDAR 3D data sets.

13. The method according to any one of the preceding claims, wherein said data sets each comprise a point cloud, each point in said point cloud corresponding to a determined location, from LIDAR sensor data, of a surface of a reflecting object.

14. The method according to any one of the preceding claims, wherein said moving comprises non-continuous movement of said LIDAR system.

15. A LIDAR navigation system comprising:
one or more light source;
one or more light sensor;
a processor operatively connected to said light source and said light sensor configured to:
control emission of light from said light source to scan a measurement field of view (FOV);
generate LIDAR 3D data sets over a time, using sensor measurements received by said one or more light sensor where each LIDAR 3D data set corresponds to said measurement FOV;
identify objects in said LIDAR 3D data sets to provide one or more identified objects;
designate one or more of said identified objects as one or more potential aggressor objects;
track position of said one or more potential aggressor objects as they move outside of a measurement FOV of said LIDAR system; and
characterize one or more of said identified objects as multi-path objects using tracked position of said one or more potential aggressor objects.
